# EUROPEAN PATENT SPECIFICATION

(11) **EP 4 293 353 B1**
(45) Date of publication and mention of the grant of the patent: **25.03.2026**
(21) Application number: 23171206.8
(22) Date of filing: 03.05.2023
(51) Int. Cl.: G01N 30/86, G01N 30/24

(54) **ANALYSIS ASSISTANCE DEVICE, ANALYSIS ASSISTANCE METHOD AND ANALYSIS ASSISTANCE PROGRAM**
ANALYSEHILFSVORRICHTUNG, ANALYSEHILFSVERFAHREN UND ANALYSEHILFSPROGRAMM
DISPOSITIF D'AIDE À L'ANALYSE, PROCÉDÉ D'AIDE À L'ANALYSE ET PROGRAMME D'AIDE À L'ANALYSE

(30) Priority: 14.06.2022 JP 2022096098
(43) Date of publication of application: 20.12.2023
(73) Proprietor: Shimadzu Corporation, Nakagyo-ku, Kyoto-shi, Kyoto 604-8511 (JP)
(72) Inventor: FUJISAKI, Shinichi, Kyoto, 604-8511 (JP); KAWASE, Tomohiro, Kyoto, 604-8511 (JP)
(74) Representative: Müller-Boré & Partner Patentanwälte PartG mbB

(56) References cited:
- US-A1- 2021 334 271
- US-A1- 2021 341 441
- US-A1- 2021 356 446

## Description

### Technical Field

The present invention relates to an analysis assistance device, an analysis assistance method and an analysis assistance program for handling measurement data obtained from the analysis device.

### Description of Related Art

There is an analysis device for analyzing components of a sample. A result of analysis in regard to a sample varies depending on an analysis condition set in the analysis device. The analysis condition includes a plurality of factors. Results of analysis, which are responses, vary depending on the values of the plurality of factors. A design space is the visual depiction of the relationship between the factors and the responses. The design space is utilized for examining the ranges of the factors in which the quality of the measurement results can be ensured.

For example, in an analysis with use of a HPLC (high performance liquid chromatograph), the design space corresponding to a specific column can be created. By referring to the design space, it is possible to visually understand how the resolution (response) of a column changes in the variation area of the temperature of a column oven (factor) or the flow rate of a mobile phase (factor). In this manner, the design space visually provides the distribution of a measurement quality indicator such as a resolution to a user. Thus, the user can efficiently evaluate a measurement quality indicator (the resolution of a column, for example). JP 2021-173628 A discloses a method of displaying a design space on a computer screen.
Document US 2021/341441 A1 describes an analysis assistance device including an estimator that estimates distribution of measurement quality index data using a plurality of analysis condition data to be provided to an analysis device and a plurality of measurement data obtained in the analysis device based on the plurality of analysis condition data, and a measurement quality index outputter that outputs for display a region where the measurement quality index data is not less than a predetermined threshold value as a design space, and the measurement quality index outputter outputs the region of the design space in an enlarged manner by cutting off at least part of a region other than the design space in a distribution region of the measurement quality index data.

### SUMMARY

The claimed invention is defined by the features set forth in the appended independent claims. Additional embodiments of the claimed invention are defined by the dependent claims.

It is possible to visually identify the relationship between the factors and the responses by utilizing the design space. Further, it is expected that the relationship between the analysis condition and the quality of a result of measurement can be considered in detail by meaningful utilization of the design space.

An object of the present invention is to provide meaningful information in regard to a distribution of a measurement quality indicator to a user.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is an overview of an analysis system according to the present embodiment;
Fig. 2 is a diagram showing the configuration of a computer according to the present embodiment;
Fig. 3 is a block diagram showing the functions of the computer according to the present embodiment;
Fig. 4 is a flowchart showing an analysis assistance method according to the embodiment; and
Fig. 5 is a diagram showing an analysis assistance screen according to the embodiment;
Fig. 6 is a diagram showing a creation screen according to the embodiment;
Fig. 7 is a diagram showing the creation screen according to the embodiment; and
Fig. 8 is a diagram showing an analysis assistance screen according to another embodiment.

### DETAILED DESCRIPTION

An analysis assistance device, an analysis assistance method and an analysis assistance program according to embodiments of the present invention will now be described with reference to the attached drawings.

### (1) Overall Configuration of Analysis System

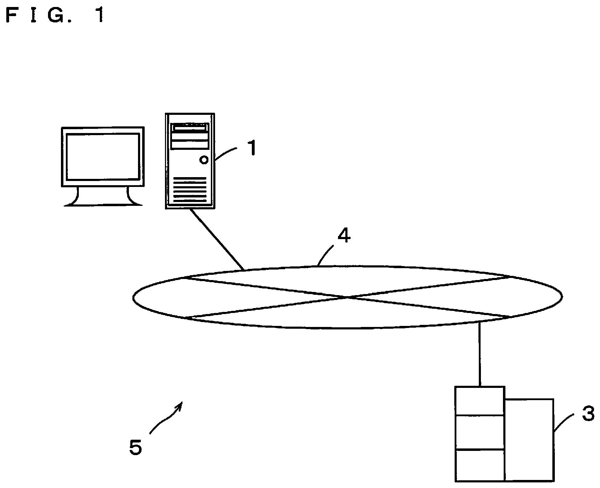

Fig. 1 is an overview of an analysis system 5 according to the present embodiment. The analysis system 5 includes a computer 1 and a liquid chromatograph 3. The computer 1 and the liquid chromatograph 3 are connected to each other through a network 4. The network 4 is a LAN (Local Area Network), for example.

The computer 1 has a function of setting an analysis condition in the liquid chromatograph 3, a function of acquiring a result of measurement in the liquid chromatograph 3 and analyzing the result of measurement, etc. A program for controlling the liquid chromatograph 3 is installed in the computer 1.

The liquid chromatograph 3 includes a pump unit, an autosampler unit, a column oven unit, a detector unit and so on. The liquid chromatograph 3 also includes a system controller. The system controller controls the liquid chromatograph 3 in accordance with a control instruction received from the computer 1 through the network 4. The system controller transmits the data of a result of measurement of the liquid chromatograph 3 to the computer 1 through the network 4.

### (2) Configuration of Computer (Analysis Assistance Device)

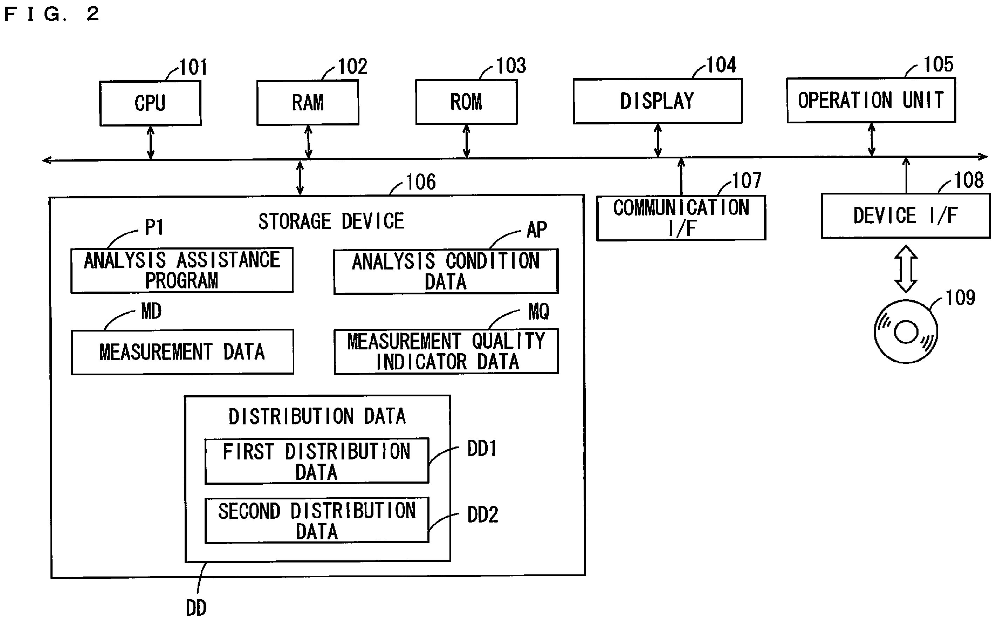

Fig. 2 is a diagram showing the configuration of the computer 1. In the present embodiment, a personal computer is utilized as the computer 1. The computer 1 includes a CPU (Central Processing Unit) 101, a RAM (Random Access Memory) 102, a ROM (Read Only Memory) 103, a display 104, an operation unit 105, a storage device 106, a communication interface 107 and a device interface 108.

The CPU 101 controls the computer 1. The RAM 102 is used as a work area for execution of a program by the CPU 101. A control program and the like are stored in the ROM 103. The display 104 is a liquid crystal display, for example. The display 104 is an example of a display device of the present invention. The operation unit 105 is a device that receives a user operation, and includes a keyboard, a mouse and so on. The display 104 may be constituted by a touch panel display, and the display 104 may have a function of serving as the operation unit 105. The storage device 106 is a device that stores various programs and data. The storage device 106 is a hard disc, for example. The communication interface 107 is an interface that communicates with another computer and another device. The communication interface 107 is connected to the network 4. The device interface 108 is an interface for accessing various external devices. The CPU 101 can access a recording medium 109 through an external device connected to the device interface 108.

The storage device 106 stores an analysis assistance program P1, analysis condition data AP, measurement data MD, measurement quality indicator data MQ and distribution data DD. The analysis assistance program P1 is a program for controlling the liquid chromatograph 3. The analysis assistance program P1 has a function of setting an analysis condition with respect to the liquid chromatograph 3 and a function of acquiring a result of measurement from the liquid chromatograph 3 and analyzing the result of measurement, etc. The analysis condition data AP is the data describing an analysis condition to be set in the liquid chromatograph 3 and includes a plurality of factors. A parameter is set for each factor, so that the analysis condition data AP is created. The measurement data MD is the data of a result of measurement acquired from the liquid chromatograph 3.

The measurement quality indicator data MQ is the data for evaluating the quality of a result of measurement acquired from the liquid chromatograph 3. The measurement quality indicator data MQ is a minimum resolution or the number of resolved peaks, for example. A resolution is a value for evaluating the distance between peaks specified in a chromatogram. In the chromatogram, a plurality of peaks corresponding to a plurality of components appear. The smallest value among a plurality of resolutions calculated based on these plurality of peaks can be a measurement quality indicator as the lowest isolation. When the lowest resolution exceeds a predetermined threshold value, it can be determined that a result of measurement in the liquid chromatograph 3 is valid. The number of resolved peaks is the number of peaks specified in a chromatogram. In a case in which the user identifies the number of substances included in a sample to be measured in advance, the number of resolved peaks can be used as a measurement quality indicator. When the number of resolved peaks exceeds a predetermined threshold value, it can be determined that a result of measurement in the liquid chromatograph 3 is valid.

The distribution data DD is the data representing the distribution of the measurement quality indicator data MQ estimated based on the analysis condition data AP actually set in the liquid chromatograph 3 and the measurement data MD actually measured in the liquid chromatograph 3. The distribution data DD represents a response surface of measurement quality indicator data MQ.

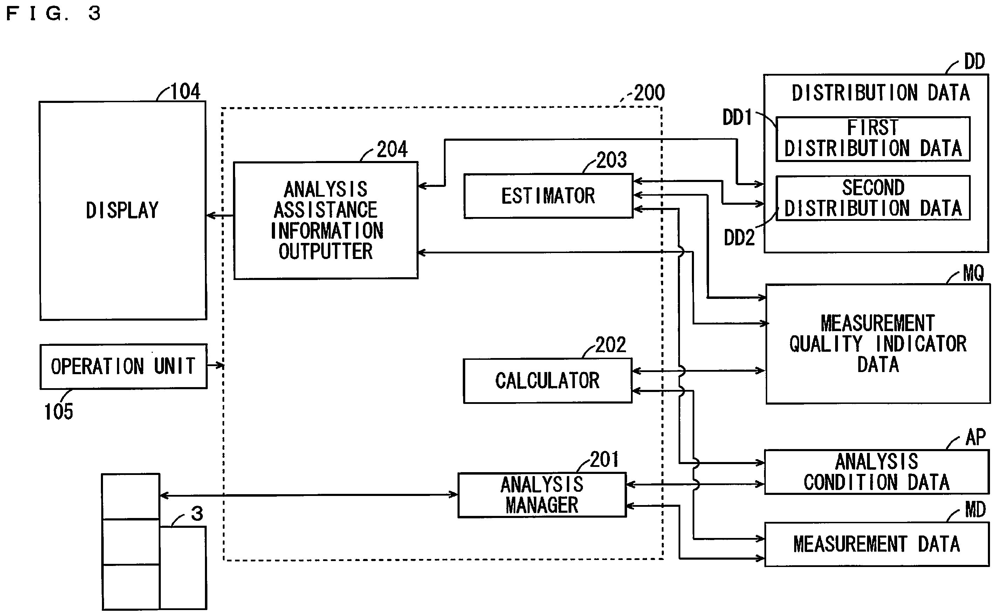

Fig. 3 is a block diagram showing the functions of the computer 1. The controller 200 is a function implemented when the CPU 101 uses the RAM 102 as a work area and executes the analysis assistance program P1. The controller 200 includes an analysis manager 201, a calculator 202, an estimator 203 and an analysis assistance information outputter 204.

The analysis manager 201 controls the liquid chromatograph 3. The analysis manager 201 provides an instruction for executing an analysis process to the liquid chromatograph 3 in response to receiving an instruction for setting of the analysis condition data AP and for start of the analysis process from the user. The analysis manager 201 also acquires the measurement data MD from the liquid chromatograph 3.

The calculator 202 calculates the measurement quality indicator data MQ based on the measurement data MD representing a result of measurement in the liquid chromatograph 3. The calculator 202 calculates a minimum resolution or the number of resolved peaks as the measurement quality indicator data MQ.

The estimator 203 estimates the distribution data DD representing the distribution of the measurement quality indicator data MQ based on the analysis condition data AP used for actual measurement and the measurement quality indicator data MQ actually calculated based on the analysis condition data AP. The distribution data DD includes an estimated value of the measurement quality indicator data MQ with respect to analysis condition data in regard to which an analysis has not actually been performed. The estimator 203 performs a regression analysis in order to estimate the distribution data DD. Specifically, the estimator 203 acquires a regression equation between a plurality of actually used analysis condition data pieces AP and a plurality of measurement quality indicator data pieces MQ calculated based on actually measured measurement data MD. Then, the estimator 203 applies the regression equation to other analysis condition data pieces that have not been actually used, thereby estimating the measurement quality indicator data pieces MQ with respect to the other analysis condition data pieces.

In the present embodiment, the estimator 203 estimates the distribution of the measurement quality indicator data MQ in each of a case in which the value of a first factor included in the analysis condition data AP is a first value and a case in which the value of the first factor included in the analysis condition data AP is a second value. For example, suppose that the first factor included in the analysis condition data AP is the type of a column. In this case, the estimator 203 estimates the distribution of the measurement quality indicator data MQ in each of a case in which the type of a column included in the analysis condition data AP is a column A (the first value) and a case in which the type of a column included in the analysis condition data AP is a column B (the second value).

The analysis assistance information outputter 204 outputs the information for assisting an analysis to the display 104 by using the analysis condition data AP, the measurement quality indicator data MQ estimated by the estimator 203, the distribution data DD and the like. The analysis assistance information outputter 204 outputs the display information based on the distribution of the measurement quality indicator data MQ in a case in which the value of the first factor is the first value. Further, the analysis assistance information outputter 204 outputs the display information based on the distribution of the measurement quality indicator data MQ in a case in which the value of the first factor is the second value.

### (3) Analysis Assistance Method

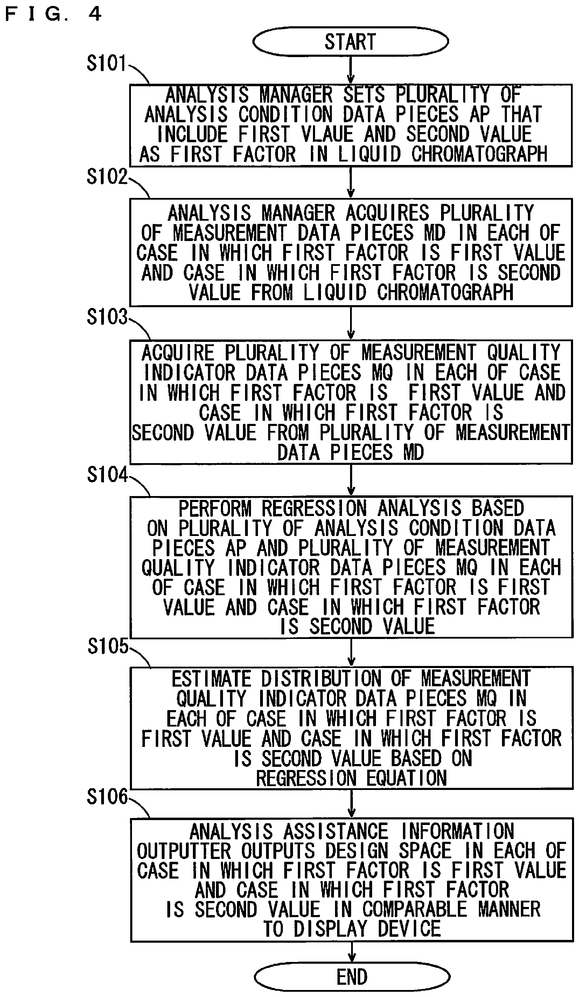

Next, an analysis assistance method performed in the computer 1 (analysis assistance device) according to the present embodiment will be described. Fig. 4 is a flowchart showing the analysis assistance method according to the present embodiment. The process shown in Fig. 4 is a process realized by execution of the analysis assistance program P1 by the CPU 11. Before the process shown in Fig. 4 is started, the user operates the operation unit 105 in advance to set a plurality of analysis condition data pieces AP. Specifically, the user sets combinations of parameters of factors such as a solvent initial concentration, a solvent mixing ratio, a gradient initial value, a gradient and a column temperature as the analysis condition data pieces AP. For example, combinations of parameters having solvent concentrations being slightly different from one another, combinations of parameters having column temperatures being slightly different from one another, etc. are set as the analysis condition data pieces AP. Further, the type of a column is set as a factor. In the following description, the type of a column is set as the first factor included in the analysis condition data pieces AP, by way of example. Further, as parameters to be set for the type of a column, the column A (the first value) and the column B (the second value) are set, by way of example. In response to receiving such a user setting operation, the analysis manager 201 stores the plurality of analysis condition data pieces AP in the storage device 106.

Next, in the step S101 shown in Fig. 4, the analysis manager 201 sets the plurality of analysis condition data pieces AP that include the first value and the second value as the first factor in the liquid chromatograph 3. Specifically, the analysis manager 201 sets the plurality of analysis condition data pieces AP in the system controller of the liquid chromatograph 3. In response to this, in the liquid chromatograph 3, an analysis process is executed multiple times with respect to the same sample based on the plurality of set analysis condition data pieces AP. In the example of the present embodiment, in the liquid chromatograph 3, an analysis process in which the column A is used is executed multiple times, and an analysis process in which the column B is used is executed multiple times.

Next, in the step S102, the analysis manager 201 acquires a plurality of measurement data pieces MD in each of a case in which the first factor is the first value and a case in which the first factor is the second value from the liquid chromatograph 3. In the example of the present embodiment, the analysis manager 201 acquires the measurement data pieces MD based on the analysis process in which the column A is used and which is executed multiple times and the measurement data pieces MD based on the analysis process in which the column B is used and which is executed multiple times. The analysis manager 201 stores the plurality of acquired measurement data pieces MD in the storage device 106.

Next, the calculator 202 acquires the plurality of measurement data pieces MD stored in the storage device 106 in the step S102. Then, in the step S103, the calculator 202 acquires the measurement quality indicator data pieces MQ in each of a case in which the first factor is the first value and a case in which the first factor is the second value from the plurality of acquired measurement data pieces MD. In the example of the present embodiment, the calculator 202 acquires the plurality of measurement quality indicator data pieces MQ from the plurality of measurement data pieces MD corresponding to the column A, and acquires the plurality of measurement quality indicator data pieces MQ from the plurality of measurement data pieces MD corresponding to the column B.

Next, in the step S104, the estimator 203 performs a regression analysis based on the plurality of analysis condition data pieces AP and the plurality of measurement quality indicator data pieces MQ in regard to each of a case in which the first factor is the first value and a case in which the first factor is the second value. Thus, the estimator 203 calculates a regression equation between an analysis condition and a measurement quality indicator. In the example of the present embodiment, the estimator 203 performs the regression analysis based on the plurality of measurement data pieces MD and the plurality of measurement quality indicator data pieces MQ corresponding to the column A, and performs the regression analysis based on the plurality of measurement data pieces MD and the plurality of measurement quality indicator data pieces MQ corresponding to the column B. In the present embodiment, Bayesian inference is used when the regression analysis is performed. Alternatively, a least squares method can be used for a regression analysis.

Subsequently, in the step S105, the estimator 203 estimates the distribution of the measurement quality indicator data pieces MQ in each of a case in which the first factor is the first value and a case in which the first factor is the second value based on the regression equations. In the example of the present embodiment, the estimator 203 estimates the distribution of the measurement quality indicator data pieces MQ corresponding to the column A to acquire a first distribution data piece DD1. Further, the estimator 203 estimates the distribution of the measurement quality indicator data pieces MQ corresponding to the column B to acquire a second distribution data piece DD2. The estimator 203 stores the distribution data pieces DD1, DD2 in the storage device 106 as shown in Figs. 2 and 3.

The above-mentioned steps S101 to S105 are performed in the computer 1 by the analysis assistance program P1, so that a measurement quality indicator is estimated also in regard to an analysis condition other than an analysis condition in regard to which an analysis has actually been performed. In the example of the present embodiment, in a case in which the first factor is the column A (first value), a measurement quality indicator is estimated also in regard to an analysis condition other than an analysis condition in regard to which an analysis has actually been performed. Further, in a case in which the first factor is the column B (second value), a measurement quality indicator is estimated also in regard to an analysis condition other than an analysis condition in regard to which an analysis has actually been performed.

Next, in the step S106, the analysis assistance information outputter 204 outputs a plurality of design spaces to the display 104 in a comparable manner. In the example of the present embodiment, the analysis assistance information outputter 204 outputs a design space in a case in which the first factor is the column A (first value) and a design space in a case in which the first factor is the column B (second value) to the display 104 in a comparable manner. That is, the analysis assistance information outputter 204 outputs the design space based on the first distribution data piece DD1 and the design space based on the second distribution data piece DD2 to the display 104 in a comparable manner.

### (4) Analysis Assistance Screen

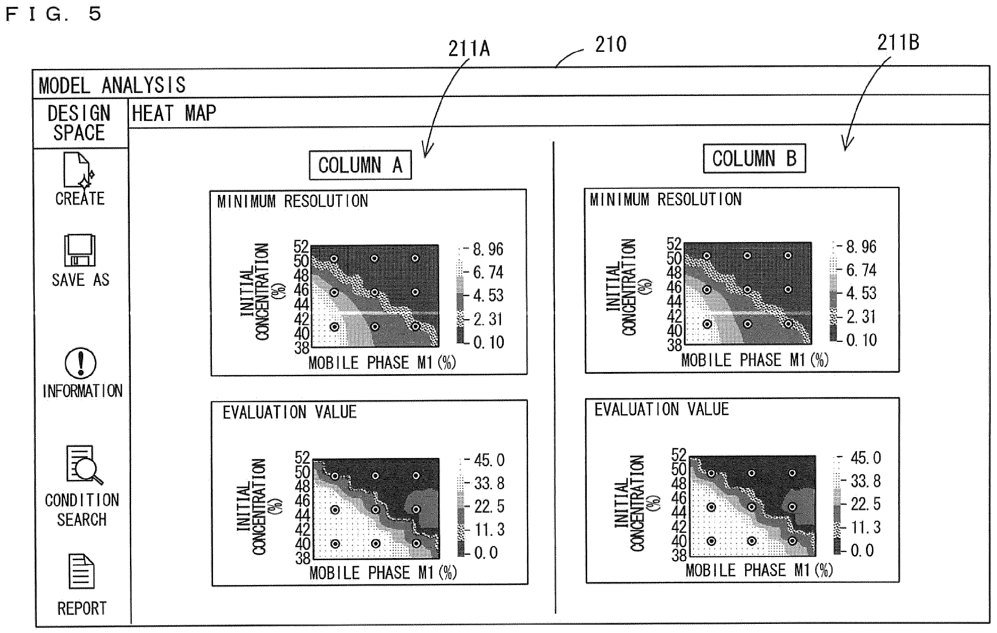

Fig. 5 is a diagram showing an analysis assistance screen 210 that is output to the display 104 by the analysis assistance information outputter 204. On the analysis assistance screen 210, a heat map 211A corresponding to the column A and a heat map 211B corresponding to the column B are displayed side by side. The analysis assistance information outputter 204 outputs the heat map relating to the column A based on the first distribution data piece DD1 and outputs the heat map relating to the column B based on the second distribution data piece DD2. A heat map is utilized as a design space. A heat map as a design space is utilized for examination of the range of a factor in which the quality of a result of measurement can be ensured.

As shown in Fig. 5, a heat map is a response map that is plotted with two factors used as axes. These factors used as display axes are referred to as axis factors. On the other hand, the first factor is a factor (a column in this case) subject to comparison. In a heat map, the distributions of responses are displayed in different colors according to the values of responses. In the example of Fig. 5, the two heat maps, corresponding to two responses which are a minimum resolution and an evaluation value, are respectively depicted in regard to the column A and the column B. The evaluation value is a value representing the measurement quality, and is calculated based on a resolution or the like. Both of the two heat maps relating to the minimum resolution and the evaluation value are depicted with two axis factors, which are an initial concentration (%) and a mobile phase M1 (%), used as axes. The initial concentration (%), which is the axis factor of the ordinate, is the initial concentration of the mobile phase M1. The mobile phase M1 (%), which is the axis factor of the abscissa, indicates the mixing ratio of the mobile phase M1. By referring to these heat maps, the user can visually identify how the response (the minimum resolution or the evaluation value) changes when the initial concentration (%) and the mobile phase M1 (%), which are axis factors, are changed.

Further, the heat maps 211A, 211B relating to the column A and the column B are arranged on the analysis assistance screen 210, which is one display screen. The user can easily compare the measurement qualities by referring to the heat maps 211A, 211B for the column A and the column B arranged side by side. The user can easily identify the influence of the type of a column when examining the design spaces. In the analysis assistance screen 210, the scales of the axis factors (the initial concentration (%) and the mobile phase M1 (%)) serving as the display axes are the same as the scales of the heat maps 211A, 211B. Thus, the user can easily compare the design spaces of the column A and the column B to each other.

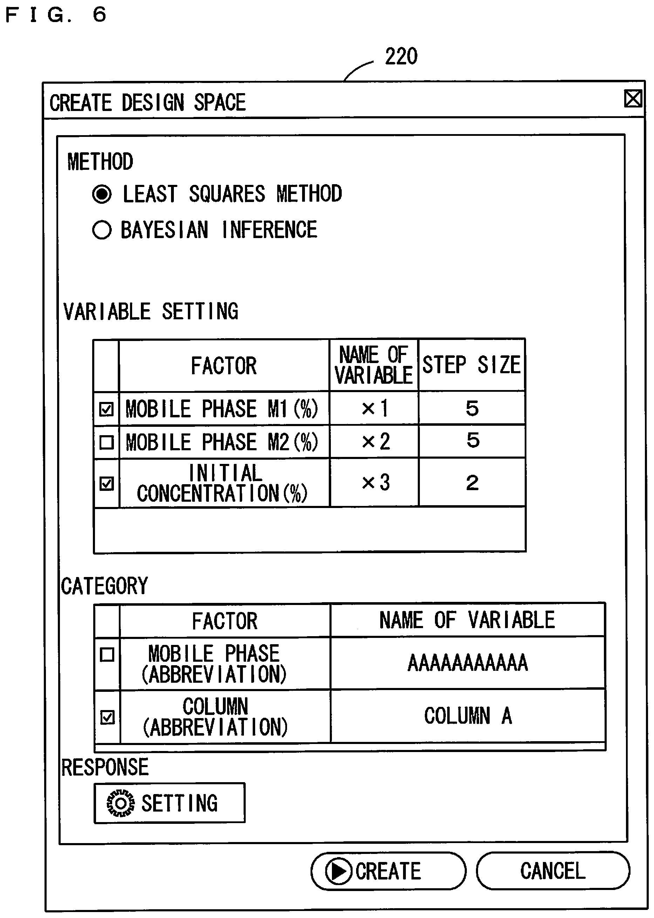

Fig. 6 is a diagram showing a creation screen 220 for creating a design space. That is, it is a screen for creating the analysis assistance screen 210 shown in Fig. 5. As shown in Fig. 6, a method menu, a variable setting menu and a category menu are arranged on the creation screen 220. The method menu is a menu for selection of a regression technique to be used for a regression analysis. In the example of Fig. 6, the user can select one from among two regression techniques which are a least squares method and Bayesian inference. The variable setting menu is a menu for setting the axis factor of a heat map to be displayed on the analysis assistance screen 210. In the example of the diagram, the initial concentration (%) and the mobile phase M1 (%) are selected as the axis factors of the heat map.

The category menu is a menu for setting the category of a heat map to be displayed on the analysis assistance screen 210. In the illustrated example, the column A is selected as the category. That is, it is set such that the heat map relating to the column A is displayed on the analysis assistance screen 210. In other words, among the plurality of factors included in the analysis condition data pieces AP, the value for a specific factor (the first factor) can be fixed in the category menu, and the design space in regard to the fixed value can be created.

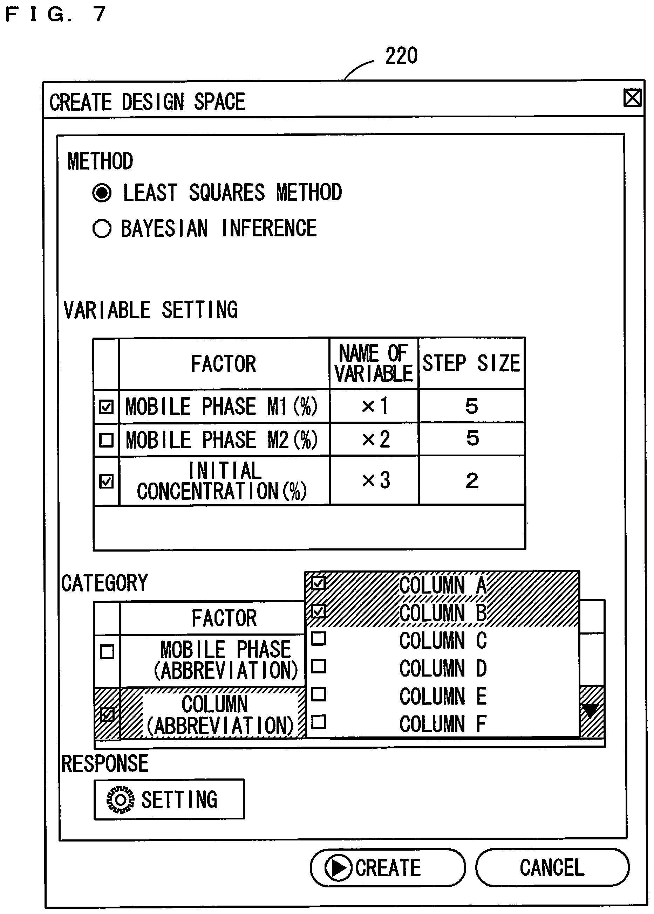

In Fig. 7, the two columns A, B are being selected in the category menu. In this manner, when the two column A and the column B are selected, the two heat maps 211A, 211B corresponding to the columns A, B are displayed as shown in Fig. 5.

As described above, the computer 1, which is the analysis assistance apparatus of the present embodiment, estimates the distribution of the measurement quality indicator data pieces MQ in a case in which the first factor (the type of a column, for example) is the first value (the column A) and the measurement quality indicator data pieces MQ in a case in which the first factor is the second value (column B), and outputs each distribution to the display 104. Each distribution displayed in the display 104 is used as a design space. The user can compare the design spaces with different set values in regard to a specific factor (the first factor) to each other. Conventionally, a specific value is set for creation of a design space in regard to a specific factor, and the design space is individually stored in a storage device, etc. It is troublesome to compare the individually created design spaces to one another. According to the present embodiment, because a plurality of design spaces corresponding to the values of a specific factor are collectively created and displayed for comparison, the user can easily examine the measurement quality. Although the column is selected as the first factor in the present embodiment, a combination of mobile phases, a sample pre-processing method, or the like may be selected. Unlike the axis factor, the first factor may be a factor that cannot be represented by a continuous value.

### (5) Other Embodiments

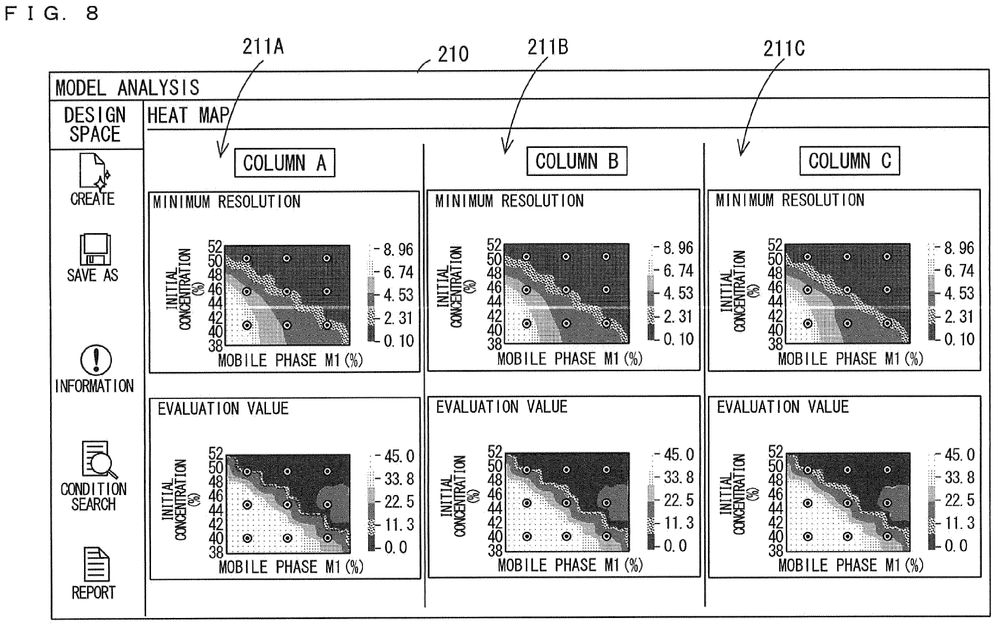

In the above-mentioned embodiment, the two heat maps 211A, 211B corresponding to the column A and the column B are displayed on the analysis assistance screen 210, by way of example. This is merely an example, and the number of heat maps that is output by the analysis assistance information outputter 204 to the display 104 may be equal to or larger than three. Fig. 8 shows an example in which the heat maps 211A, 211B corresponding to the column A and the column B and a heat map 211C corresponding to a column C are displayed.

In the above-mentioned embodiment, the liquid chromatograph 3 serves as the analysis device of the present invention, by way of example. The present invention can also be applied to a gas chromatograph. Further, in the above-mentioned embodiment, the computer 1 serving as the analysis assistance device of the present embodiment is connected to the liquid chromatograph 3 serving as the analysis device through the network 4, by way of example. In another embodiment, the computer 1 may be built in the analysis device.

In the above-mentioned embodiment, the analysis assistance program P1 is stored in the storage device 106, by way of example. In another embodiment, the analysis assistance program P1 may be stored in the recording medium 109 to be provided. The CPU 101 may access the recording medium 109 through the device interface 108 and save the analysis assistance program P1 stored in the recording medium 109 in the storage device 106 or the ROM 103. Alternatively, the CPU 101 may access the recording medium 109 through the device interface 108 and execute the analysis assistance program P1 stored in the recording medium 109. Alternatively, in a case in which the analysis assistance program P1 is stored in a server on a network, the CPU 101 may download the analysis assistance program P1 through the communication interface 107.

### (6) Aspects

It will be appreciated by those skilled in the art that the exemplary embodiments described above are illustrative of the following aspects.

An analysis assistance device according to the claimed invention is defined by the features set forth in the appended independent claim 1.

According to the claimed invention, it is possible to provide a user with meaningful information in regard to the distributions of the measurement quality indicators.

The analysis assistance device according to a further aspect of the claimed invention, which may be implemented in conjunction with the claimed invention, the analysis assistance information outputter may cause the display device to display the respective distributions side by side.

Since the distributions are displayed side by side, the user can easily compare the respective distributions to one another.

The analysis assistance device according to a further aspect of the claimed invention, which may be implemented in conjunction with the claimed invention or with one or more of the above-mentioned further aspects, the respective distributions output to the display device may include design spaces.

The user can compare and examine the ranges of factors in which the measurement quality can be ensured by referring to the respective design spaces.

The analysis assistance device according to a further aspect of the claimed invention, which may be implemented in conjunction with the claimed invention or with one or more of the above-mentioned further aspects, a same scale may be used for the respective distributions output to the display device as a scale of a factor which is a display axis.

Because the respective distributions are displayed in the same scale, the user can easily compare and examine the respective distributions.

The analysis assistance device according to a further aspect of the claimed invention, which may be implemented in conjunction with the claimed invention or with one or more of the above-mentioned further aspects, the respective distributions output to the display device may be arranged in one display screen.

Because the respective distributions are arranged in the one display screen, the user can easily compare and examine the respective distributions.

The analysis assistance device according to a further aspect of the claimed invention, which may be implemented in conjunction with the claimed invention or with one or more of the above-mentioned further aspects, a factor that is not representable by a continuous value may be used as the first factor.

The distributions can be compared to one another in regard to a factor that cannot be represented by a continuous value, such as the type of component.

An analysis assistance method according to the claimed invention is defined by the features set forth in the appended independent claim 7.

It is possible to provide the user with meaningful information in regard to the distributions of the measurement quality indicators.

An analysis assistance program according to the claimed invention is defined by the features set forth in the appended independent claim 8.

It is possible to provide the user with meaningful information in regard to the distributions of the measurement quality indicators.

## Claims

1. An analysis assistance device comprising:
an estimator (203) that estimates a distribution of measurement quality indicator data (MQ) by performing a regression analysis with use of a plurality of analysis condition data pieces (AP) supplied to an analysis device and a plurality of measurement data pieces (MD) obtained by the analysis device based on the plurality of analysis condition data pieces (AP); and
an analysis assistance information outputter (204) that outputs a distribution of the measurement quality indicator data (MQ) to a display device (104), wherein
the analysis condition data pieces (AP) include a first, a second and a third factor, said analysis assistance device being **characterized in that**
the estimator (203) estimates the distribution of the measurement quality indicator data (MQ) with the second factor and the third factor as axes in a case in which the first factor is a first value and the distribution of the measurement quality indicator data (MQ) with the second factor and the third factor as axes in a case in which the first factor is a second value, and **in that**
the analysis assistance information outputter (204) outputs the respective distributions to the display device (104).

2. The analysis assistance device according to claim 1, wherein
the analysis assistance information outputter (204) causes the display device (104) to display the respective distributions side by side.

3. The analysis assistance device according to claim 1 or 2, wherein
the respective distributions output to the display device (104) include design spaces.

4. The analysis assistance device according to claim 1 or 2, wherein
a same scale may be used for the respective distributions output to the display device (104) as a scale of a factor which is a display axis.

5. The analysis assistance device according to claim 1 or 2, wherein
the respective distributions output to the display device (104) are arranged in one display screen (210).

6. The analysis assistance device according to claim 1 or 2, wherein
a factor that is not representable by a continuous value is used as the first factor.

7. An analysis assistance method including:
an estimating step of estimating a distribution of measurement quality indicator data (MQ) by performing a regression analysis with use of a plurality of analysis condition data pieces (AP) supplied to an analysis device and a plurality of measurement data pieces (MD) obtained by the analysis device based on the plurality of analysis condition data pieces (AP); and
an outputting step of outputting a distribution of the measurement quality indicator data (MQ) to a display device (104), wherein
the analysis condition data pieces (AP) include a first, a second and a third factor, said analysis assistance method being **characterized in that**
the estimating step includes estimating the distribution of the measurement quality indicator data (MQ) with the second factor and the third factor as axes in a case in which the first factor is a first value and the distribution of the measurement quality indicator data with the second factor and the third factor as axes in a case in which the first factor is a second value, and **in that**
the outputting step includes outputting the respective distributions to the display device (104).

8. An analysis assistance program (P1) which, when executed on a computer connected to an analysis device comprising a display device (104), causes said computer to perform an analysis assistance method,
the analysis assistance method including:
an estimating step of estimating a distribution of measurement quality indicator data (MQ) by performing a regression analysis with use of a plurality of analysis condition data pieces (AP) supplied to said analysis device and a plurality of measurement data pieces (MD) obtained by the analysis device based on the plurality of analysis condition data pieces (AP); and
an outputting step of outputting a distribution of the measurement quality indicator data (MQ) to said display device (104), wherein
the analysis condition data pieces (AP) include a first, a second and a third factor, said analysis assistance program being **characterized in that**
the estimating step includes estimating the distribution of the measurement quality indicator data (MQ) with the second factor and the third factor as axes in a case in which the first factor is a first value and the distribution of the measurement quality indicator data with the second factor and the third factor as axes in a case in which the first factor is a second value, and **in that**
the outputting step includes outputting the respective distributions to the display device (104).

## Patentansprüche

1. Eine Analyseunterstützungsvorrichtung, umfassend:
einen Schätzer (203), der eine Verteilung von Messqualitätsindikator-Daten (MQ) schätzt, indem eine Regressionsanalyse durchgeführt wird unter Verwendung einer Vielzahl von Analysebedingungs-Datenelementen (AP), die einer Analysevorrichtung zugeführt werden, und einer Vielzahl von Messdatenelementen (MD), die von der Analysevorrichtung auf der Grundlage der Vielzahl von Analysebedingungs-Datenelementen (AP) erhalten werden; und
einen Analyseunterstützungs-Informationsausgeber (204), der eine Verteilung der Messqualitätsindikator-Daten (MQ) an eine Anzeigevorrichtung (104) ausgibt, wobei
die Analysebedingungs-Datenelemente (AP) einen ersten, einen zweiten und einen dritten Faktor beinhalten, wobei die genannte Analyseunterstützungsvorrichtung **dadurch gekennzeichnet ist, dass**
der Schätzer (203) Folgendes schätzt: die Verteilung der Messqualitätsindikator-Daten (MQ) mit dem zweiten Faktor und dem dritten Faktor als Achsen in einem Fall, in dem der erste Faktor ein erster Wert ist, sowie die Verteilung der Messqualitätsindikator-Daten (MQ) mit dem zweiten Faktor und dem dritten Faktor als Achsen in einem Fall, in dem der erste Faktor ein zweiter Wert ist, **und dadurch, dass**
der Analyseunterstützungs-Informationsausgeber (204) die jeweiligen Verteilungen an die Anzeigevorrichtung (104) ausgibt.

2. Die Analyseunterstützungsvorrichtung nach Anspruch 1, wobei
der Analyseunterstützungs-Informationsausgeber (204) die Anzeigevorrichtung (104) veranlasst, die jeweiligen Verteilungen nebeneinander anzuzeigen.

3. Die Analyseunterstützungsvorrichtung nach Anspruch 1 oder 2, wobei
die jeweiligen an die Anzeigevorrichtung (104) ausgegebenen Verteilungen Designräume beinhalten.

4. Die Analyseunterstützungsvorrichtung nach Anspruch 1 oder 2, wobei
für die jeweiligen an die Anzeigevorrichtung (104) ausgegebenen Verteilungen dieselbe Skala wie die Skala eines Faktors verwendet werden kann, der eine Anzeigeachse ist.

5. Die Analyseunterstützungsvorrichtung nach Anspruch 1 oder 2, wobei
die jeweiligen an die Anzeigevorrichtung (104) ausgegebenen Verteilungen auf einem Anzeigebildschirm (210) angeordnet sind.

6. Die Analyseunterstützungsvorrichtung nach Anspruch 1 oder 2, wobei
ein Faktor, der nicht durch einen kontinuierlichen Wert darstellbar ist, als erster Faktor verwendet wird.

7. Ein Analyseunterstützungsverfahren, das Folgendes beinhaltet:
einen Schätzungsschritt zum Schätzen einer Verteilung von Messqualitätsindikator-Daten (MQ), indem eine Regressionsanalyse durchgeführt wird unter Verwendung einer Vielzahl von Analysebedingungs-Datenelementen (AP), die einer Analysevorrichtung zugeführt werden, sowie einer Vielzahl von Messdatenelementen (MD), die von der Analysevorrichtung auf der Grundlage der Vielzahl von Analysebedingungs-Datenelementen (AP) erhalten werden; und
einen Ausgabeschritt zum Ausgeben einer Verteilung der Messqualitätsindikator-Daten (MQ) an eine Anzeigevorrichtung (104), wobei
die Analysebedingungs-Datenelemente (AP) einen ersten, einen zweiten und einen dritten Faktor beinhalten, wobei das genannte Analyseunterstützungsverfahren **dadurch gekennzeichnet ist, dass**
der Schätzungsschritt Folgendes beinhaltet: Schätzen der Verteilung der Messqualitätsindikator-Daten (MQ) mit dem zweiten Faktor und dem dritten Faktor als Achsen in einem Fall, in dem der erste Faktor ein erster Wert ist, sowie der Verteilung der Messqualitätsindikator-Daten mit dem zweiten Faktor und dem dritten Faktor als Achsen in einem Fall, in dem der erste Faktor ein zweiter Wert ist, **und dadurch, dass**
der Ausgabeschritt das Ausgeben der jeweiligen Verteilungen an die Anzeigevorrichtung (104) beinhaltet.

8. Ein Analyseunterstützungsprogramm (P1), das, wenn es auf einem Computer ausgeführt wird, der mit einer Analysevorrichtung verbunden ist, die eine Anzeigevorrichtung (104) umfasst, den genannten Computer veranlasst, ein Analyseunterstützungsverfahren durchzuführen,
wobei das Analyseunterstützungsverfahren Folgendes beinhaltet:
einen Schätzungsschritt zum Schätzen einer Verteilung von Messqualitätsindikator-Daten (MQ), indem eine Regressionsanalyse durchgeführt wird unter Verwendung einer Vielzahl von Analysebedingungs-Datenelementen (AP), die der genannten Analysevorrichtung zugeführt werden, sowie einer Vielzahl von Messdatenelementen (MD), die von der Analysevorrichtung auf der Grundlage der Vielzahl von Analysebedingungs-Datenelementen (AP) erhalten werden; und
einen Ausgabeschritt zum Ausgeben einer Verteilung der Messqualitätsindikator-Daten (MQ) an die genannte Anzeigevorrichtung (104), wobei
die Analysebedingungs-Datenelemente (AP) einen ersten, einen zweiten und einen dritten Faktor beinhalten, wobei das genannte Analyseunterstützungsprogramm **dadurch gekennzeichnet ist, dass**
der Schätzungsschritt Folgendes beinhaltet: Schätzen der Verteilung der Messqualitätsindikator-Daten (MQ) mit dem zweiten Faktor und dem dritten Faktor als Achsen in einem Fall, in dem der erste Faktor ein erster Wert ist, sowie der Verteilung der Messqualitätsindikator-Daten mit dem zweiten Faktor und dem dritten Faktor als Achsen in einem Fall, in dem der erste Faktor ein zweiter Wert ist, **und dadurch, dass**
der Ausgabeschritt das Ausgeben der jeweiligen Verteilungen an die Anzeigevorrichtung (104) beinhaltet.

## Revendications

1. Un dispositif d'assistance à l'analyse comprenant :
un estimateur (203) qui estime une distribution de données d'indicateur de qualité de mesure (MQ) en effectuant une analyse de régression à l'aide d'une pluralité d'éléments de données de condition d'analyse (AP) fournis à un dispositif d'analyse, et d'une pluralité d'éléments de données de mesure (MD) obtenus par le dispositif d'analyse sur la base de la pluralité d'éléments de données de condition d'analyse (AP) ; et
un dispositif de sortie d'informations d'assistance à l'analyse (204) qui sort une distribution des données d'indicateur de qualité de mesure (MQ) vers un dispositif d'affichage (104), sachant que
les éléments de données de conditions d'analyse (AP) incluent un premier, un deuxième et un troisième facteur, ledit dispositif d'assistance à l'analyse **étant caractérisé en ce que**
l'estimateur (203) estime la distribution des données d'indicateur de qualité de mesure (MQ) avec le deuxième facteur et le troisième facteur comme axes dans le cas où le premier facteur est une première valeur, et estime la distribution des données d'indicateur de qualité de mesure (MQ) avec le deuxième facteur et le troisième facteur comme axes dans le cas où le premier facteur est une deuxième valeur, et **en ce que**
le dispositif de sortie d'informations d'assistance à l'analyse (204) sort les distributions respectives vers le dispositif d'affichage (104).

2. Le dispositif d'assistance à l'analyse d'après la revendication 1, sachant que
le dispositif de sortie d'informations d'assistance à l'analyse (204) amène le dispositif d'affichage (104) à afficher les distributions respectives côte à côte.

3. Le dispositif d'assistance à l'analyse d'après la revendication 1 ou 2, sachant que
les distributions respectives sorties vers le dispositif d'affichage (104) incluent des espaces de conception.

4. Le dispositif d'assistance à l'analyse d'après la revendication 1 ou 2, sachant que
la même échelle peut être utilisée pour les distributions respectives sorties vers le dispositif d'affichage (104) en tant qu'échelle d'un facteur qui est un axe d'affichage.

5. Le dispositif d'assistance à l'analyse d'après la revendication 1 ou 2, sachant que
les distributions respectives sorties vers le dispositif d'affichage (104) sont disposées sur un seul écran d'affichage (210).

6. Le dispositif d'assistance à l'analyse d'après la revendication 1 ou 2, sachant que
un facteur qui n'est pas représentable par une valeur continue est utilisé comme premier facteur.

7. Un procédé d'assistance à l'analyse incluant :
une étape d'estimation consistant à estimer une distribution de données d'indicateur de qualité de mesure (MQ) en effectuant une analyse de régression à l'aide d'une pluralité d'éléments de données de condition d'analyse (AP) fournis à un dispositif d'analyse, et d'une pluralité d'éléments de données de mesure (MD) obtenus par le dispositif d'analyse sur la base de la pluralité d'éléments de données de condition d'analyse (AP) ; et
une étape de sortie consistant à sortir une distribution des données d'indicateur de qualité de mesure (MQ) vers un dispositif d'affichage (104), sachant que
les éléments de données de conditions d'analyse (AP) incluent un premier, un deuxième et un troisième facteur, ledit procédé d'assistance à l'analyse étant **caractérisé en ce que**
l'étape d'estimation inclut l'estimation de la distribution des données d'indicateur de qualité de mesure (MQ) avec le deuxième facteur et le troisième facteur comme axes dans le cas où le premier facteur est une première valeur, et de la distribution des données d'indicateur de qualité de mesure avec le deuxième facteur et le troisième facteur comme axes dans le cas où le premier facteur est une deuxième valeur, et **en ce que**
l'étape de sortie inclut la sortie des distributions respectives vers le dispositif d'affichage (104).

8. Un programme d'assistance à l'analyse (P1) qui, lorsqu'il est exécuté sur un ordinateur connecté à un dispositif d'analyse comprenant un dispositif d'affichage (104), amène ledit ordinateur à exécuter un procédé d'assistance à l'analyse,
le procédé d'assistance à l'analyse incluant :
une étape d'estimation consistant à estimer une distribution de données d'indicateur de qualité de mesure (MQ) en effectuant une analyse de régression à l'aide d'une pluralité d'éléments de données de condition d'analyse (AP) fournis audit dispositif d'analyse, et d'une pluralité d'éléments de données de mesure (MD) obtenus par le dispositif d'analyse sur la base de la pluralité d'éléments de données de condition d'analyse (AP) ; et
une étape de sortie consistant à sortir une distribution des données d'indicateur de qualité de mesure (MQ) vers ledit dispositif d'affichage (104), sachant que
les éléments de données de conditions d'analyse (AP) incluent un premier, un deuxième et un troisième facteur, ledit programme d'assistance à l'analyse étant **caractérisé en ce que**
l'étape d'estimation inclut l'estimation de la distribution des données d'indicateur de qualité de mesure (MQ) avec le deuxième facteur et le troisième facteur comme axes dans le cas où le premier facteur est une première valeur, et de la distribution des données d'indicateur de qualité de mesure avec le deuxième facteur et le troisième facteur comme axes dans le cas où le premier facteur est une deuxième valeur, et **en ce que**
l'étape de sortie inclut la sortie des distributions respectives vers le dispositif d'affichage (104).
